# EUROPÄISCHE PATENTSCHRIFT

(11) **EP 2 925 200 B1**
(45) Veröffentlichungstag und Bekanntmachung des Hinweises auf die Patenterteilung: **08.05.2019**
(21) Anmeldenummer: 13805293.1
(22) Anmeldetag: 27.11.2013
(51) Int. Cl.: A47J 43/07

(54) **KÜCHENMASCHINE**
KITCHEN MACHINE
MACHINE POUR LA CUISINE

(30) Priorität: 29.11.2012 DE 102012111600
(43) Veröffentlichungstag der Anmeldung: 07.10.2015
(73) Patentinhaber: Vorwerk & Co. Interholding GmbH, 42275 Wuppertal (DE)
(72) Erfinder: KOETZ, Hendrik, 58300 Wetter (DE)
(74) Vertreter: Müller, Enno
(86) Internationale Anmeldenummer: PCT/EP2013/074797
(87) Internationale Veröffentlichungsnummer: WO 2014/083021

(56) Entgegenhaltungen:
- EP-A1- 1 561 409
- WO-A2-2011/106350
- DE-A1-102010 060 650
- US-A1- 2002 176 320
- US-A1- 2005 068 846
- US-A1- 2010 270 285
- US-A1- 2011 149 677

## Beschreibung

Die Erfindung betrifft eine elektrisch betriebene Küchenmaschine nach den Merkmalen des Oberbegriffes des Anspruches 1.

Küchenmaschinen der in Rede stehenden Art sind bekannt, so beispielsweise aus der DE 102007059236 A1. Mittels solcher Küchenmaschinen ist die Bearbeitung von Lebensmitteln, darüber hinaus bei aufheizbaren Rührgefäßen das Garen von Speisen möglich. Die auf das Rührgefäß beziehungsweise auf den Inhalt des Rührgefäßes einwirkende Heizleistung bevorzugt durch den Benutzer regelbar ist, wie auch bevorzugt die Drehrichtung und die Drehgeschwindigkeit des Rührwerkes in dem Rührgefäß, darüber hinaus gegebenenfalls auch die Zeitdauer der Einwirkung von Heizung und/oder Rührwerk.

Bekannt ist weiter, insbesondere die vorgenannten Parameter der Küchenmaschine durch elektrische beziehungsweise elektronische oder mechanische Stellmittel an der Küchenmaschine einzustellen, so beispielsweise mittels Drehschalter oder Taster. Auch ist in diesem Zusammenhang bekannt, der Küchenmaschine einen bevorzugt nicht flüchtigen Speicher zuzuordnen, der eine Rezeptauswahl anbietet. Eine solche Rezeptauswahl ist bevorzugt auf einem Display der Küchenmaschine anzeig- und auswählbar. Diesbezüglich wird auf die DE 102009055794 A1 oder auch die DE 102010060650 A1 verwiesen. Wählt der Benutzer ein in der Küchenmaschine hinterlegtes Rezept aus, so werden bevorzugt die einzustellenden Parameter, wie gegebenenfalls Temperatur, Rührwerk-Drehzahl und Zeitdauer von dem Programm vorgegeben und, gegebenenfalls nach Bestätigung durch den Benutzer, selbsttätig eingestellt; sind darüber hinaus gegebenenfalls durch den Benutzer abänderbar.

Aus der US 2005/0068846 A1 ist eine Küchenmaschine bekannt, die über eine Spracherkennung Steuerbefehle empfangen kann. Als weitere Stand der Technik Dokumente werden angesehen: US2005/068846, US2011/149677, EP1561409, US2002/176320, WO2011/106350.

Ausgehend von dem zuletzt genannten Stand der Technik beschäftigt sich die Erfindung mit der Aufgabe, eine Küchenmaschine der genannten Art hinsichtlich einer sicheren Handhabung und Bedienung vorteilhaft auszubilden.

Diese Aufgabe ist beim Gegenstand des Anspruches 1 gelöst, wobei darauf abgestellt ist, dass ein optisches System vorgesehen ist, das überprüfen lässt, ob sich eine Person direkt vor der Küchenmaschine befindet und dieser auch zugewandt ist.

Es ist eine Möglichkeit zur gleichzeitigen optischen Erkennung und Spracherkennung gegeben. Hierdurch lässt sich auch eine Küchenmaschine günstig steuern, die hinsichtlich der Arbeitsmöglichkeiten kritische Funktionen aufweist, die nicht zufällig oder unfreiwillig ausgelöst werden sollten.

In einer weiteren Ausgestaltung bevorzugt, dass die Küchenmaschine weiter eine Sprachausgabe aufweist, insbesondere zur akustischen Betätigung eines empfangenen akustischen Signals (insbesondere Wort oder Wortfolge) des Benutzers, dem die höchste Wahrscheinlichkeit zugemessen wird. Weiter bevorzugt ist hierzu in beziehungsweise an der Küchenmaschine ein Lautsprecher vorgesehen. In diesem Zusammenhang kann vorgesehen sein, dass der von der Spracherkennungssoftware erkannte und akustisch wiedergegebene Begriff oder Befehl durch den Benutzer mit einem weiteren, abschließenden Signal zu bestätigen ist oder abgelehnt werden kann. Es kann sich bevorzugt um eine Ja/Nein-Quittierung handeln.

In weiter bevorzugter Ausgestaltung wird das analysierte und in einen Befehl gewandelte Akustiksignal auf Plausibilität hin geprüft. Ein nicht plausibler Befehl führt bevorzugt zu einer optischen oder akustischen Nachfrage. Wenn beispielsweise in einer Teigknet-Drehzahlstellung eine Temperatur von 90°C gewählt, erfolgt eine Rückfrage, die gegebenenfalls eine besondere Bestätigung verlangen kann. Es kann auch vorgesehen sein, dass die Steuerung den ermittelten Befehl als nicht durchführbar abweist.

Auch ist bevorzugt, dass die Spracherkennung mit Anschalten der Küchenmaschine aktiviert ist. Mit Aktivieren der Küchenmaschine, beispielsweise zufolge Betätigung eines Hauptschalters oder Einstecken eines Netzsteckers in die Netzsteckdose der hausseitigen Stromversorgung, kann sich die Küchenmaschine bereits in einem sogenannten Stand-By-Modus befinden, in welchem die Spracherkennung zugleich aktiviert ist.

Zudem ist bevorzugt, dass die Spracherkennung nur durch Ausschalten der Küchenmaschine deaktivierbar ist, beispielsweise zufolge Betätigung des Hauptschalters in eine Aus-Stellung oder Trennen der netzseitigen Stromversorgung.

Es kann vorgesehen sein, dass die Spracherkennung eine Anweisung zur Durchführung einer Arbeitsroutine erst aufnimmt oder freigibt, wenn ein bestimmtes akustisches Signal, beispielsweise ein Signalwort, erkannt wurde. Hierbei handelt es sich bevorzugt um ein hinterlegtes, d.h. in einer Datenbank der Küchenmaschine abgespeichertes Codewort, wonach erst die Spracherkennung bezüglich Arbeitsbefehle oder Rezeptaufrufe aktiviert wird. So wird vermieden, dass auf diesem Wege die Küchenmaschine zufällig bedient werden kann.

Mit einem akustischen Code beziehungsweise einem Signalwort ist in weiter bevorzugter Ausgestaltung die Spracherkennungssoftware auch wieder deaktivierbar. Hierzu kann aber auch ein vorprogrammierter Zeitraum ausreichend sein, in dem kein weiteres akustisches Signal empfangen wurde.

Auch kann vorgesehen sein, dass die Küchenmaschine als solche durch einen akustischen Code ausgeschaltet werden kann. Die Spracherkennungssoftware sowie die zur entsprechenden Erkennung vorgesehenen weiteren Komponenten, wie beispielsweise das Mikrofon, können hierzu eine eigene Stromversorgung aufweisen. Es kann eine eigene Batterie- oder Akkumulator-Stromversorgung vorgesehen sein. Mit Erfassen und Registrieren des richtigen Signalwortes werden die weiteren elektrischen und elektronischen Komponenten der Küchenmaschine aktiviert. Die Spannungsversorgung dieser Komponenten kann hierdurch geschaltet werden.

Auch ist bevorzugt, dass die Befehlsworte in einem vorbestimmten Abstand zum Mikrofon und/oder in einer vorbestimmten Mindest-Lautstärke empfangen werden müssen, um diese auszuwerten. So ist sichergestellt, dass der die Küchenmaschine durch akustische Signale, wie insbesondere Sprachbefehle bedienende Benutzer sich in unmittelbarer Nähe zu dieser befindet, so bevorzugt in einem Abstand von 0,5 bis 2 m, weiter bevorzugt etwa 1 m.

Die Erkennungsgenauigkeit von akustischen Signalen, so insbesondere der Spracherkennung, kann weiter erhöht werden. Die auf Mikrofonen basierte Erkennung ist durch eine optische Erkennung, bevorzugt mittels einer Kamera, ergänzt. Da im Umfeld einer Küchenmaschine oftmals Stör- und Nebengeräusche, wie Telefon-, Radio- oder Motorgeräusche auftreten, können Signale, beispielsweise durch Störgeräusche, überlagert sein. Eine akustische Umwandlung eines Sprachbefehls in einen Maschinenbefehl kann daher durch ein optisches System ergänzt werden, vergleichbar mit Lippenlesen. Eine in der Küchenmaschine eingebaute Kamera kann eine entsprechende Person erfassen und Bewegungen ihrer Lippen beziehungsweise ihres Mundes analysieren, um so auf das gesprochene Wort zu schließen Die so gewonnenen optischen Informationen können mit den akustischen Informationen abgeglichen werden, um so die Erkennungsrate der Sprachbefehle zu erhöhen beziehungsweise die Robustheit gegenüber Fehlinterpretationen zu steigern.

Es kann vorgesehen sein, dass die Küchenmaschine nur auf Sprachbefehle reagiert, wenn die Küchenmaschine direkt angesprochen ist, sie also eindeutig Adressat des akustischen Signals ist.

In einer Umgebung einer Küchenmaschine in einem Haushalt gibt es auch vielfältige andere Geräuschquellen, wie durch ein Radio oder einen Fernseher. Es ist nicht auszuschließen, dass hierdurch akustische Signale von der Küchenmaschine empfangen werden, die als an die Küchenmaschine gerichtete Anweisung von dieser interpretiert werden. Um sicherzustellen, dass eine Küchenmaschine möglichst nur dann einen Sprachbefehl in einen Maschinenbefehl umwandelt, wenn dies vom Nutzer auch so gewollt ist, kann das optische System, insbesondere in Form einer elektronischen Kamera mit Auswerte-elektronik, genutzt sein. Hierdurch lässt sich überprüfen, ob eine Person sich direkt vor der Küchenmaschine befindet und dieser auch zugewandt ist. Nur in diesem Fall soll eine Küchenmaschine auf Sprachbefehle reagieren. Wird keine Person erkannt, werden alle Sprachbefehle bevorzugt ignoriert.

Der Schallwandler kann eine Aufzeichnung von Schall und somit auch gesprochener Befehle oder Anweisungen beispielsweise in Form von digitalen Daten ermöglichen.

Die Küchenmaschine ist geeignet, auch von Personen genutzt zu werden, die im Sehen behindert sind. Mittels der Signalsteuerung ist es möglich, dass insbesondere die Stellgrößen Drehzahl, Dauer und gegebenenfalls Temperatur, beziehungsweise Kochfunktionen, beispielsweise komplexe Garvorgänge oder die Auswahl eines Rezepts, durch akustisches Signal, insbesondere Sprache, gewählt werden können. Es ist hierbei nicht erforderlich, in einer bevorzugten Ausgestaltung aber gleichwohl möglich, die Küchenmaschine, zumindest im betriebsbereiten Zustand, hierbei auch zu berühren und entsprechende Tasten oder Schalter suchen zu müssen.

Das Akustiksignal ist bevorzugt ein Lautsignal des Benutzers, weiter bevorzugt das gesprochene Wort des Benutzers, etwa in Form eines Sprachbefehls. Ein Sprachbefehl kann typisiert sein, also beispielsweise ein oder mehrere für eine Funktion oder Auswahl vorgegebene Schlüsselwörter umfassen.

Auch sind bevorzugt über die Signalerkennung vollständige Rezepte aus einer bevorzugt internen Rezept-Datenbank der Küchenmaschine per Sprache anzuwählen, sofern ein geeignetes, d.h. beispielsweise dem Sprachbefehl zuordbares Rezept oder ein Teilbereich eines Rezeptes in der Rezeptdatenbank hinterlegt ist. Ein derartiges Rezept oder ein Teilbereich hiervon umfasst insbesondere einen sequenziellen Ablauf einer oder mehrere der drei vorbezeichneten Stellgrößen beziehungsweise komplexe Garfunktionen. Der Ablauf beinhaltet die Auswahl der Stellgröße und die Einstellung der Stellgröße. Eine komplexe Garfunktion kann sich durch einen Regelmechanismus auszeichnen. Auf eine Messung eines Parameters, wie etwa die Temperatur hin, kann eine selbsttätige Anpassung einer Funktion, wie hier etwa der Heizleistung, erfolgen.

Der Ablauf insbesondere des Garprozesses kann hierbei unter Umständen relativ umfangreich sein, so dass der Benutzer durch einen einmaligen verbalen Aufruf des Rezeptes oder eines Teilbereiches hiervon eine Arbeitserleichterung erfährt. Das Rezept wird direkt aufgerufen, bevorzugt ohne dass der Benutzer sich - auch verbal - durch die Menüstruktur der Rezeptdatenbank bewegen muss.

Die Bedienung von Schaltern oder Tastern, wie dies aus dem Stand der Technik bekannt ist, ist in der Regel nicht intuitiv, erfordert vielmehr zumeist das Studium einer Bedienungsanleitung und eine gewisse Übung mit der Küchenmaschine. Insbesondere die Sprache hingegen erweist sich für den Benutzer als intuitiv und erfordert keine Einarbeitung. Lediglich das Gewöhnen an einen bestimmten Wortschatz ist gegebenenfalls notwendig, um die Küchenmaschine mit der eigenen Stimme zu steuern.

Mit einem Schallwandler in Form eines elektronischen Mikrofons, welches bevorzugt im Gehäuse der Küchenmaschine, weiter bevorzugt in dem bei üblichen Arbeiten mit der Küchenmaschine dem Benutzer zugewandten Bereich des Gehäuses angeordnet ist, wird das gesprochene Wort oder ein anderes akustisches Signal des Benutzers beziehungsweise der daraus resultierende Schalldruck in elektrische Signale umgewandelt. Diese Signale werden bevorzugt von einem digitalen Signalprozessor (DSP) verarbeitet und analysiert. Nach der kontinuierlichen Analyse der empfangenen akustischen Signale und dem Vergleich mit einer vorher definierten Signalliste, die weiter bevorzugt in einer gespeicherten Datenbank vorliegt, liefert der digitale Signalprozessor die einer höchsten Wahrscheinlichkeit entsprechende Auswertung zurück. Es wird eine Überprüfung dahingehend angestellt, mit welchem hinterlegten Signal das empfangene akustische Signal die höchste Übereinstimmung aufweist.

Bevorzugt analysiert in weiterer Einzelheit ein Mikrokontroller in einem weiteren Schritt das beispielsweise in Textform vorliegende Wort oder das akustische Signal und übersetzt dieses in einen Maschinenbefehl oder unmittelbar in ein Rezept, hinter dem eine Sequenz von Maschinenbefehlen hinterlegt ist. Abschließend wird der oder werden die Maschinenbefehle an die Steuerung der Küchenmaschine weitergeleitet und von dieser ausgeführt.

Ein Aufheizen und/oder ein Laufen des Rührwerkes wird in weiter bevorzugter Ausgestaltung nur durchgeführt, wenn Drehzahl, Temperatur und Zeitdauer vorgegeben werden oder auf einen diesbezüglichen Vorschlag der Küchenmaschine hin akzeptiert werden. Dies bedeutet, dass der Benutzer in einem Fall für alle drei Parameter Werte angeben muss, so insbesondere für die Drehzahl, die Temperatur und die Zeitdauer. Die Reihenfolge kann hierbei vorgegeben sein beziehungsweise durch eine Sprachausgabe der Küchenmaschine nacheinander abgefragt werden.

Alternativ, insbesondere bei Nutzung eines hinterlegten Rezepts, welches bevorzugt durch einen Sprachbefehl aufgerufen wurde, kann über die Küchenmaschine eine akustische Ausgabe der entsprechend dem Rezept selbsttätig eingestellten Parameter, wie Drehzahl, Temperatur und Zeitdauer durch den Benutzer per Spracheingabe bestätigt werden.

Bei ausgeschalteter Spracherkennung, die bevorzugt auch willentlich hier durch den Nutzer jeweils ausschaltbar ist, kann eine übliche von Hand Bedienung der Küchenmaschine durchgeführt werden. Bevorzugt ist eine übliche von Hand Bedienung auch ergänzend zu einer Bedienung über Spracherkennung möglich. Nach Wahl des Nutzers kann er eine Anweisung durch ein akustisches Signal und Spracherkennung an die Küchenmaschine geben oder eine bestimmte von Hand Bedienung vornehmen. Es kann auch möglich sein, dass voreingestellt oder wählbar ist, dass die Küchenmaschine nur über Spracherkennung bedienbar ist.

Die hier vor- und nachstehend beschriebene Softwareauswertung braucht nicht notwendig in der Küchenmaschine vorgenommen zu werden. Sie kann auch durch beispielsweise Funkverbindung zu einem außerhalb der Küchenmaschine befindlichen Computer oder Handgerät, wie etwa einem Mobiltelefon, durchgeführt werden. Sie kann auch in einem räumlich entfernten Computer ("Cloud") durchgeführt werden.

Nachstehend ist die Erfindung anhand der beigefügten Zeichnung erläutert, die aber lediglich ein Ausführungsbeispiel darstellt. Auf der Zeichnung zeigt:
- Fig. 1: in Ansicht eine Küchenmaschine der in Rede stehenden Art mit einem in einer Rührgefäßaufnahme aufgenommenen Rührgefäß, mechanischen Schaltern zur Einstellung von Stellgrößen sowie einem Display;

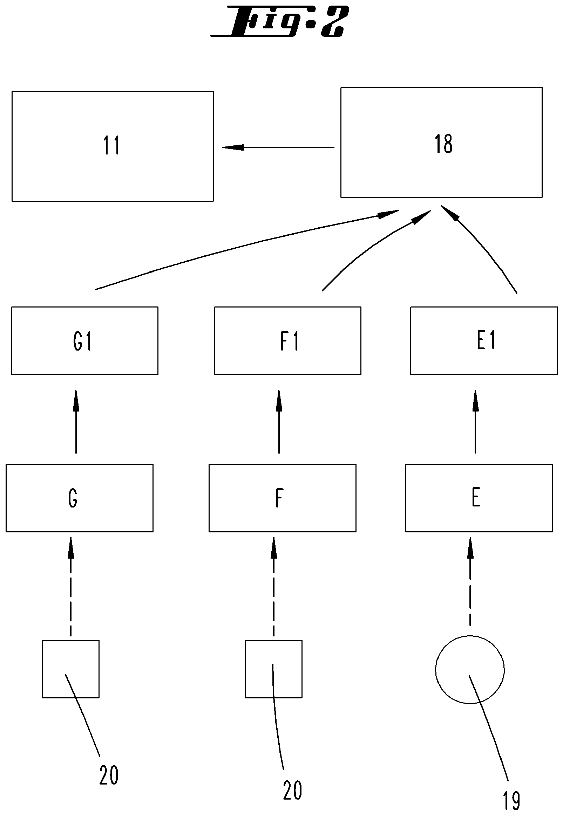

- Fig. 2: eine schematische Darstellung der zur Steuerung der Küchenmaschine 1 in dieser abgelegten Erkennungssoftware und Datenbanken;
- Fig. 3: ein Flussdiagramm zur Darstellung einer beispielhaften Bedienung der Küchenmaschine.

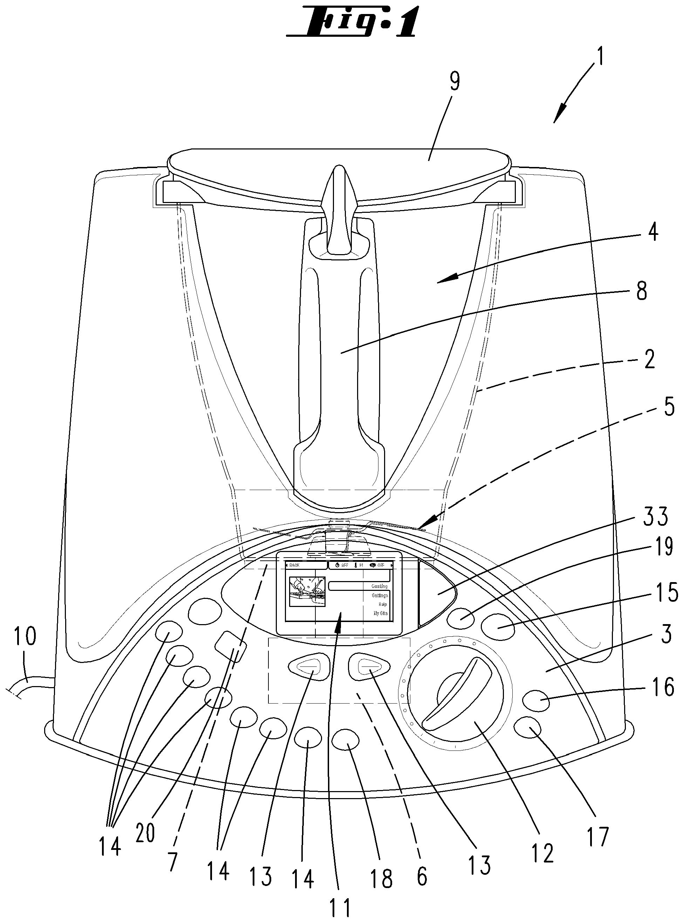

Dargestellt und beschrieben ist zunächst mit Bezug zu Figur 1 eine Küchenmaschine 1 mit einer Rührgefäß-Aufnahme 2 und einem Bedienfeld 3.

Der Küchenmaschine 1 ist ein Rührgefäß 4 zuordbar, indem dieses in die Rührgefäß-Aufnahme 2 insbesondere im Fußbereich des Rührgefäßes 4 bevorzugt formschlüssig eingesetzt wird. In dem Rührgefäß 4 ist dem Rührgefäßboden zugeordnet ein Rührwerk 5 vorgesehen, welches über einen in der Küchenmaschine 1 unterhalb der Rührgefäß-Aufnahme 2 angeordneten, in der Zeichnung lediglich schematisch dargestellten Elektromotor 6 betrieben wird. Das Rührwerk 5 verbleibt in dem Rührgefäß 4 auch bei Entnahme desselben aus der Rührgefäß-Aufnahme 2, wozu weiter bevorzugt das Rührwerk 5 in der Zuordnungsstellung über eine drehfeste Steckkupplung mit dem Elektromotor 6 verbunden ist.

Der Boden des Rührgefäßes 4 ist bevorzugt beheizbar zur Erhitzung eines in dem Rührgefäß 4 befindlichen Garguts. Bevorzugt kommt hier eine elektrische Widerstandsheizung 7 zum Einsatz, welche in dem Boden des Rührgefäßes 4 integriert ist.

Das Rührgefäß 4 ist bevorzugt topfartig mit im Wesentlichen kreisrundem Querschnitt ausgebildet, bei sich zur Topföffnung, d.h. nach oben hin konisch erweiterndem Querschnitt. Die Topfwandung besteht bevorzugt aus einem Metallwerkstoff.

Weiter weist das Rührgefäß 4 einen bevorzugt senkrecht ausgerichteten Haltegriff 8 auf, welcher beispielsweise sockelseitig sowie topfrandseitig an dem Rührgefäß 4 festgelegt ist.

Das Rührgefäß 4 wird der Küchenmaschine 1 bevorzugt derart zugeordnet, dass der Haltegriff 8 sich freistehend zwischen Gerätegehäuse-Backen, dem Bedienfeld 3 zugewandt, erstreckt, wobei der Sockelbereich des Rührgefäßes 4 sich auf einem integralen Boden der Küchenmaschine 1 im Bereich der Aufnahme 2 abstützt, dies unter Kupplung von Rührwerksantrieb und Rührwerk 5 sowie bevorzugt elektrischer Kontaktierung der rührgefäßbodenseitigen Heizung.

Auf das Rührgefäß 4 ist ein Gefäßdeckel 9 aufsetzbar, welcher im Betrieb der Küchenmaschine 1, weiter insbesondere bei Betrieb des Rührwerks 5 und/oder der bodenseitigen Widerstandsheizung 7, in einer aufgesetzten Stellung verriegelt ist, weiter bevorzugt an dem Gehäuse der Küchenmaschine 1. Zentral besitzt der Gefäßdeckel 9 eine nicht dargestellte Einfüllöffnung.

Die Elektroversorgung des Elektromotors 6 sowie der weiter bevorzugt rührgefäßbodenseitig vorgesehenen Heizung 7 und darüber hinaus auch der elektrischen Steuerung der gesamten Küchenmaschine 1 ist über ein Netzanschlusskabel 10 erreicht.

In dem Bedienfeld 3 ist zunächst bevorzugt ein Display 11 vorgesehen. Weiter bevorzugt trägt das Bedienfeld 3 einen oder mehrere mechanische Schalter und Regler zum Einstellen unterschiedlicher Stellgrößen für den Betrieb der Küchenmaschine 1. So ist bevorzugt zunächst ein Drehschalter 12 vorgesehen, zur Einstellung der Drehzahl des Rührwerks 5, wobei bevorzugt über den Drehschalter 12 Rührwerk-Drehzahlstufen angewählt werden und jeder Rührwerk-Drehzahlstufe eine vorgegebene Rührwerk-Drehzahl zugeordnet ist.

In dem dargestellten Ausführungsbeispiel sind weitere, bevorzugt unterhalb des Displays 11, zwei mechanische Schalter in Form von Tasten 13 vorgesehen. Hiermit kann eine Zeitdauer als Stellgröße eingegeben werden, über welche Zeitdauer bevorzugt das Rührwerk 5 und/oder die bodenseitige Heizung 7 des Rührgefäßes 4 aktiviert wird.

Darüber hinaus kann eine Reihe von mechanischen Schaltern in Form von Tasten 14 vorgesehen sein, über welche unterschiedliche, vorgegebene Temperaturen wählbar sind. Bevorzugt handelt es sich um Temperaturen im Bereich von 37°C bis hin zu 100°C. Mit der hierüber gewählten Temperatur und der gegebenenfalls über den Drehschalter 12 gewählten Rührwerk-Drehzahl wird das sich in dem Rührgefäß 4 befindliche Gargut über den mittels der Tasten 13 vorgegebenen Zeitraum mit Wärme beaufschlagt.

Zudem können in dem Bedienfeld 3 bevorzugt weitere Tasten zum Aufrufen hinterlegter Sonderfunktionen vorgesehen sein, so insbesondere eine Taste 15 zur Aktivierung einer Turbofunktion, bei welcher kurzzeitig, d.h. bevorzugt über einen Zeitraum von 1 bis 3 Sekunden, weiter bevorzugt über einen dem Zeitraum der Tastenbeaufschlagung entsprechenden Zeitraum, das Rührwerk 5 mit einer Höchstdrehzahl betrieben wird. So führt weiter bevorzugt die Turbofunktion zu einer kurzzeitigen Drehzahl des Rührwerks 5 von mehr als 10.000 U/min, weiter bevorzugt mehr als 12.000 U/min, bis hin zu beispielsweise 15.000 U/min.

Eine weitere Taste 16 dient bevorzugt zur Aktivierung einer Richtungsumkehrfunktion für das Rührwerk 5. Dreht das Rührwerk 5 im üblichen Betrieb bevorzugt im Rechtslauf, so ermöglicht die Taste 16 die Umschaltung auf einen Linkslauf. Die neue Drehrichtung kann bis zum Ablauf des über die Tasten 13 vorgegebenen Zeitraumes beibehalten werden. Weiter bevorzugt schaltet die Elektronik der Küchenmaschine 1 (dann) selbsttätig in die Standard-Drehrichtung zurück. Durch eine nochmalige Betätigung der Taste 16 während des Rührwerkbetriebs kann auch eine erneute Drehrichtungsumkehr durchführbar sein.

Zum Weiteren ist bevorzugt eine Taste 17 vorgesehen, zur Aktivierung einer Teigrührfunktion, welche insbesondere bei der Herstellung schwerer Hefe- und Brotteige zur Anwendung kommt.

Die über den Drehschalter 12 sowie über die Tasten 13 bis 17 einzustellenden Stellgrößen beziehungsweise aufzurufenden Funktionen sind bevorzugt in dem Display 11 anzeigbar.

In der Küchenmaschine 1 ist weiter bevorzugt eine Rezeptdatenbank 18 hinterlegt. Diese beinhaltet, bevorzugt kategorisiert, eine Mehrzahl von Rezepten zur Zubereitung in der Küchenmaschine 1. Jedem Rezept zugeordnet sind bevorzugt die Parameter beziehungsweise Stellgrößen bezüglich Drehzahl des Rührwerks 5, Temperatur der Widerstandsheizung 7 und Zeitdauer. Bevorzugt werden diese Stellgrößen mit Aktivierung des Rezeptablaufes selbsttätig durch die Küchenmaschine 1 eingestellt oder dem Benutzer zur Bestätigung vorgegeben.

Darüber hinaus können jedem Rezept beispielsweise Benutzer oder Benutzergruppen zugeordnet sein, so dass jeder Benutzer der Küchenmaschine 1 seine bevorzugten Rezepte quasi mit einem Knopfdruck aufrufen kann, ohne sich zeitaufwendig durch das Menü zu bewegen. Letzteres wird in üblicher Weise bevorzugt auf dem Display 11 angezeigt, welches Display 11 in einer Ausführungsform als Touchscreen ausgebildet sein kann.

Die Küchenmaschine 1 ist, bevorzugt auch ergänzend und parallel zu einer Bedienung über ein Akustiksignal, in üblicher Weise manuell bedienbar, so insbesondere zufolge Betätigung von Drehschalter 12 und Tasten 13 bis 17.

Bevorzugt wird die Küchenmaschine 1 zur Bedienung zunächst freigeschaltet, weiter bevorzugt allein durch eine oder mehrere berechtigte Personen.

Der Berechtigungsnachweis zur Freischaltung der Küchenmaschine und zur Aktivierung der Betriebsfunktionen der Küchenmaschine ist bevorzugt durch eine Sprachsteuerung und/oder eine Gestensteuerung und/oder eine Gesichtserkennung erreicht.

Hierzu weist die Küchenmaschine 1 weiter bevorzugt eine Spracherkennungssoftware E und/oder eine Gesichtserkennungssoftware F und/oder eine Gestenerkennungssoftware G auf. Weiter ist insbesondere im Bereich des Bedienfeldes 3 in Zusammenwirkung mit der Spracherkennungssoftware E ein Schallwandler 19 in Form eines Mikrofons angeordnet. Das Mikrofon, wie auch eine weiter bevorzugt vorgesehene elektronische Kamera 20, ist in dem Bedienfeld 3 potenziell in Richtung auf den Benutzer der Küchenmaschine 1 gerichtet. Die Kamera 20 dient zur Aufnahme von auswertbaren Bildern im Zusammenhang mit der Gesichtserkennungssoftware F und/oder der Gestenerkennungssoftware G.

Bei der Spracherkennung wird bevorzugt das gesprochene Wort, insbesondere das Befehlswort beziehungsweise der daraus resultierende Schalldruck in elektrische Signale umgewandelt und von einem digitalen Signalprozessor verarbeitet und analysiert. Nach der kontinuierlichen Analyse der empfangenen Worte und dem Vergleich mit einer vorher definierten Wortliste innerhalb einer Befehlsdatenbank E₁ liefert der Signalprozessor das Wort mit der höchsten Wahrscheinlichkeit zurück, welches mit dem gesprochenen Wort übereinstimmt. Ein Mikrokontroller analysiert in einem weiteren Schritt das in Textform vorliegende Wort und übersetzt dieses in einen Maschinenbefehl oder in ein Rezept beziehungsweise setzt dies derart um, dass gezielt ein Rezept aus der Rezeptdatenbank 18 abgerufen und zumindest auf dem Display 11 angezeigt wird. In einer bevorzugten Weiterbildung führt die Übermittlung des Maschinenbefehls an die Rezeptdatenbank 18 dazu, dass die zu dem aufgerufenen Rezept oder Rezeptabschnitt zugehörigen Parameter, wie Drehzahl, Temperatur und Zeit automatisch voreingestellt werden.

Alternativ oder auch kombinativ zu der Spracherkennung wird unter Nutzung der in dem Bedienfeld 3 vorgesehenen Kamera 20 kontinuierlich ein Bild aufgenommen, dies insbesondere zur Gesichtserkennung, darüber hinaus alternativ oder kombinativ hierzu zur Gestenerkennung. Befindet sich ein Benutzer in einem definierten Bildausschnitt und einer definierten Entfernung vor der Küchenmaschine 1, wird das Bild untersucht, im Falle einer Gesichtserkennung das Gesicht extrahiert und mit einer vorher erstellten Gesichterdatenbank F₁ verglichen. Der Vergleich mit der Gesichterdatenbank F₁ ist erreicht mit einem in der Küchenmaschine integrierten Prozessor, wobei die Gesichterdatenbank F₁, wie auch die weiteren Datenbanken bevorzugt in einem nicht flüchtigen Speicher hinterlegt sind.

Ist über die Gesichtserkennung F ein in der Gesichterdatenbank F₁ als Referenzwert hinterlegtes Gesicht erkannt, so kann auch diese Erkennung, wie auch bei der Spracherkennung, zur Übersetzung in einen Maschinenbefehl oder in ein Rezept zur Auswahl aus der Rezeptdatenbank 18 führen.

Wird über die Kamera 20 eine Geste des Benutzers erkannt, beispielsweise Auf- und Abführen einer Hand, Wischen mit der Hand usw., kann dies bevorzugt zu denselben Arbeitsbefehlen wie vorbeschrieben bezüglich der Gesichtserkennung oder Spracherkennung führen.

Befindet sich ein Benutzer in einem definierten Bildausschnitt und Entfernung, wird das aufgenommene Bild untersucht und der Körper des Benutzers beziehungsweise Körperteile, wie Gesicht oder Hände, extrahiert. Befindet sich der Körper der erkannten Person in einer stabilen Position, wird die Gestenerkennung G initialisiert. Die Bewegung beispielsweise einer Hand wird hierbei stetig beobachtet und analysiert. Zur Erkennung wird die Bewegung einer Hand mittels Berechnung von Bewegungsvektoren ermittelt. Dafür eignet sich die Differenz-Bildberechnung, in der in aufeinanderfolgenden Bildern zunächst ein extrahiertes Merkmal (beispielsweise die Hand) bestimmt wird und deren Position in den analysierten Bildern gesucht wird. Stimmt eine Bewegung mit einer vorher definierten Geste der Gestendatenbank G₁ überein, wird die hierfür hinterlegte Funktion der Küchenmaschine 1 ausgeführt, so beispielsweise die Einstellung eines oder mehrerer Parameter, wie Drehzahl, Temperatur oder Zeit, darüber hinaus die Auswahl eines bestimmten Rezeptes aus der Rezeptdatenbank 18.

Die jeweilige Erkennung zur bevorzugt berührungslosen Steuerung der Küchenmaschine 1 - welche bevorzugt neben der üblichen manuellen Steuerung der Küchenmaschine 1 möglich ist - erfordert in einer bevorzugten Ausgestaltung zunächst das Anschalten der Küchenmaschine 1, insbesondere die Aktivierung derselben, beispielsweise über einen Hauptschalter. Alternativ ist die Freischaltung der Küchenmaschine durch einen bestimmten Sprachbefehl und/oder Gestenbefehl und/oder gegebenenfalls durch Erkennen eines bestimmten Gesichts erreichbar. So ist die Küchenmaschine 1 bevorzugt nur insgesamt aktivierbar durch Erfassen eines vorgegebenen Signalwortes oder einer vorgegebenen Geste, wobei sich bevorzugt Signalwort oder Geste von üblichen Worten oder Gesten stark unterscheidet.

Durch eine Gesichtserkennung ist die Freischaltung der Küchenmaschine 1 auf bestimmte Personen einschränkbar.

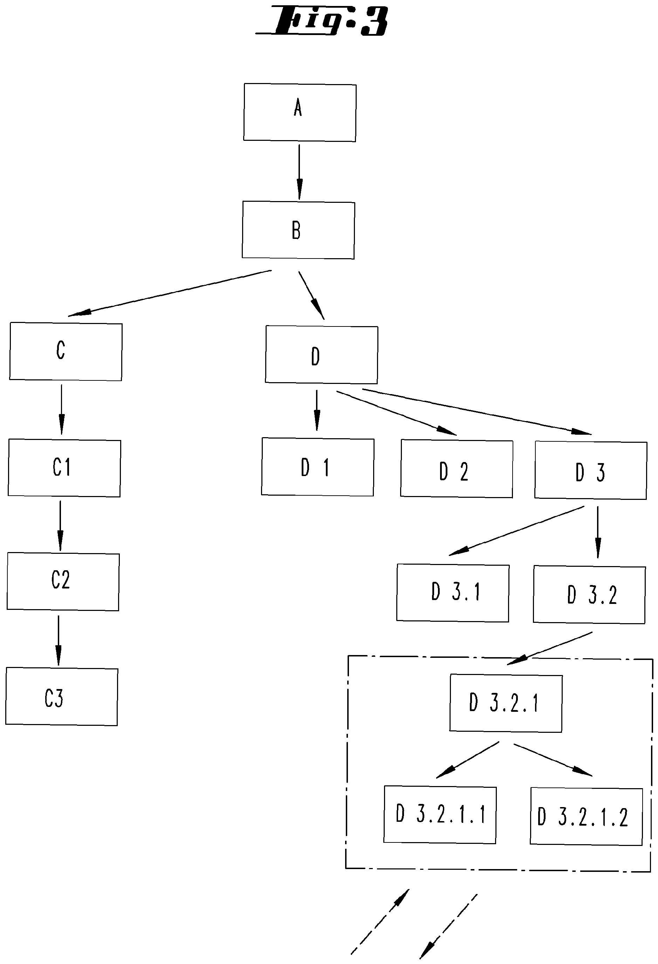

Ausgehend von dieser Freischaltung in Punkt A in Figur 3 ist die Küchenmaschine 1 unter Punkt B wahlweise bedienbar, so zum Einen in üblicher Weise manuell bedienbar, zum Weiteren berührungslos zufolge Gesten- und/oder Gesichts- und/oder Spracherkennung.

Durch ein bestimmtes Befehlswort und/oder eine bestimmte Geste und/oder durch ein mit entsprechendem Parameter belegtes Gesichtbild in der Gesichtsdatenbank können nach Freischaltung der jeweiligen Erkennung die Parameter manuell eingestellt werden (Punkt C), so insbesondere die Drehzahl C₁, die Temperatur C₂ und die Zeitdauer C₃, und/oder die Rezeptdatenbank unter Punkt D aufgerufen werden. Je nach Befehlswort, Gesicht oder Geste sind alle Funktionen freigeschaltet oder stehen nur eingeschränkt zur Verfügung.

Wie weiter aus dem Flussdiagramm in Figur 3 zu erkennen, sind die Rezepte D in stark gefächerten Untermenüs aufgeteilt, so in dem dargestellten Ausführungsbeispiel zunächst unter den Oberbegriffen "Soßen" D1, "Fleisch" D2 und "Backwaren" D3, wobei letzterer Begriff wiederum unterteilt ist in "Kuchen" D3.1 und "Brot" D3.2.

Der Menüpunkt "Brot" bietet unter anderem ein Untermenü "Brötchen" D3.2.1, welches wiederum unterteilt ist beispielsweise in "Weizen-Brötchen" D3.2.1.1 und "Roggen-Brötchen" D3.2.1.2.

Über die Spracherkennung E kann beispielsweise durch die Rezeptdatenbank manövriert werden, so insbesondere zufolge Befehlswort, die den einzelnen Menüpunkten entsprechen (beispielsweise "Rezepte", "Backwaren", "Brot" usw.).

Alternativ kann über die Spracherkennung E auch direkt ein Untermenü aufgerufen werden, beispielsweise durch das Wort "Brötchen", woraufhin dann im Display 11 unmittelbar das Untermenü angezeigt wird.

Weiter alternativ werden die möglichen Untermenüpunkte akustisch, zufolge einer Sprachausgabe angegeben, woraufhin der Benutzer mit entsprechendem Befehlswort reagieren kann. Entspricht das Befehlswort unmittelbar einem nicht sich weiter unterteilenden Untermenü, in dem dargestellten Ausführungsbeispiel beispielsweise "Roggen-Brötchen", so wird das entsprechende Rezept unmittelbar aufgerufen und gegebenenfalls die Parameter für Drehzahl, Temperatur und Zeit eingestellt.

Die Gestenerkennung und die hieraus resultierende Arbeitsroutine der Küchenmaschine 1 ist äquivalent zu der vorbeschriebenen Spracherkennung. Unterschiedliche Gesten, insbesondere mit der Hand, führen zu jeweils der Geste zugehörigen Arbeitsroutinen der Küchenmaschine 1, so beispielsweise zum Aufruf eines bestimmten Rezeptes oder zur Einstellung etwaiger Sonderfunktionen der Küchenmaschine, wie beispielsweise die Rührteigstellung.

Bei Erkennung eines bestimmten Gesichts kann in Abhängigkeit von den zu dem in der Datenbank hinterlegten Vergleichsgesicht zugehörigen Parametern eine Auswahl an Rezepten bis hin zu einem Rezept vorgegeben werden.

Unabhängig davon, ob eine Gestenerkennung, eine Gesichtserkennung, oder eine Spracherkennung nutzbar ist oder genutzt wird oder auch eine Kombination hieraus, ist weiter bevorzugt, dass der registrierte und umzusetzende Befehl zunächst beispielsweise optisch in dem Display 11 oder akustisch durch Sprachausgabe nachgefragt wird. Bei einer Spracherkennung kann der Benutzer hierauf beispielsweise mit ja oder nein reagieren.

Die Einstellung von Drehzahl C₁ und/oder Temperatur C₂ mittels einer Geste und/oder einem Wortbefehl wird in bevorzugter Ausgestaltung nur dann in eine entsprechende Aktion umgesetzt, wenn zudem auch die Zeitdauer C₃ eingestellt wurde. Dies kann manuell erfolgen. Darüber hinaus kann auch eine Nachfrage erfolgen, um den Nutzer aufzufordern, die Zeitdauer noch anzugeben.

Drehzahl, Temperatur und/oder Zeit können bei einer Gestenerkennung beispielsweise durch stetige Aufwärtsbewegung der Hand oder Abwärtsbewegung derselben eingestellt werden.

**Bezugszeichenliste:**

| | | | |
|---|---|---|---|
| 1 | Küchenmaschine | A | Freigabe |
| 2 | Rührgefäß-Aufnahme | B | Auswahl |
| 3 | Bedienfeld | C | Parametereinstellung |
| 4 | Rührgefäß | C₁ | Drehzahl |
| 5 | Rührwerk | C₂ | Temperatur |
| 6 | Elektromotor | C₃ | Zeitdauer |
| 7 | Widerstandsheizung | D | Rezepte |
| 8 | Haltegriff | D1 | Soßen |
| 9 | Gefäßdeckel | D2 | Fleisch |
| 10 | Netzanschlusskabel | D3 | Backwaren |
| 11 | Display | D3.1 | Kuchen |
| 12 | Drehschalter | D3.2 | Brot |
| 13 | Taste | D3.2.1 | Brötchen |
| 14 | Taste | D3.2.1.1 | Weizen-Brötchen |
| 15 | Taste | D3.2.1.2 | Roggen-Brötchen |
| 16 | Taste | E | Spracherkennung |
| 17 | Taste | E₁ | Befehlsdatenbank |
| 18 | Rezeptdatenbank | F | Gesichtserkennung |
| 19 | Schallwandler | F₁ | Gesichtsdatenbank |
| 20 | Kamera | G | Gestenerkennung |
| | | G₁ | Gestendatenbank |

## Patentansprüche

1. Elektrisch betriebene Küchenmaschine (1) mit einem Rührgefäß (4) und einem Rührwerk (5) in dem Rührgefäß (4), wobei die Küchenmaschine (1) einen Schallwandler (19) aufweist und eine Spracherkennungssoftware gespeichert ist und in Abhängigkeit einer Spracherkennung (E) eine Arbeitsroutine der Küchenmaschine (1) durchführbar ist, **dadurch gekennzeichnet, dass** ein optisches System in Form einer elektronischen Kamera mit Auswerteelektronik vorgesehen ist, das überprüfen lässt, ob eine Person sich direkt vor der Küchenmaschine befindet und dieser auch zugewandt ist.

2. Küchenmaschine nach Anspruch 1, **dadurch gekennzeichnet, dass** die Spracherkennung (E) mit Anschalten der Küchenmaschine (1) aktiviert ist.

3. Küchenmaschine nach einem der vorhergehenden Ansprüche, **dadurch gekennzeichnet, dass** die Spracherkennung (E) nur durch Ausschalten der Küchenmaschine (1) deaktivierbar ist.

4. Küchenmaschine nach einem der vorhergehenden Ansprüche, **dadurch gekennzeichnet, dass** die Spracherkennung (E) die Durchführung einer Arbeitsroutine nur aufnimmt oder freigibt, wenn ein Signalwort erfasst ist.

5. Küchenmaschine nach einem der vorhergehenden Ansprüche, **dadurch gekennzeichnet, dass** ein Aufheizen des Rührgefäßes und/ oder ein Laufen des Rührwerks (5) nur durchführbar ist, wenn die Drehzahl (C₁), die Temperatur (C₂) und die Zeitdauer (C₃) vorgegeben sind oder auf einen diesbezüglichen Vorschlag der Küchenmaschine (1) hin akzeptiert sind.

6. Küchenmaschine nach einem der vorhergehenden Ansprüche, **dadurch gekennzeichnet, dass** das optische System dazu ausgebildet ist, eine Erkennung im Sinne eines Lippenlesens vorzunehmen.

7. Küchenmaschine nach einem der vorhergehenden Ansprüche, **dadurch gekennzeichnet, dass** das optische System dazu ausgebildet ist, zufolge der optischen Erkennung mit der Spracherkennung zu Erhöhung der Erkennungsrate abgleichbar zu sein.

## Claims

1. An electrically operated food processor (1) with a mixing bowl (4) and a mixer (5) in the mixing bowl (4), wherein the food processor (1) encompasses an acoustic transducer (19) and a speech recognition software is stored and that it is possible to use speech recognition (E) to cause the food processor (1) to carry out a routine task, **characterized in that** provision is made for an optical system in form of an electronic camera with evaluation electronics, which checks, whether a person is located directly in front of the food processor and also faces it.

2. The food processor according to claim 1, **characterized in that** the speech recognition (E) is activated by turning on the food processor (1).

3. The food processor according to one of the preceding claims, **characterized in that** the speech recognition (E) can only be deactivated by turning off the food processor (1).

4. The food processor according to one of the preceding claims, **characterized in that** the speech recognition (E) only starts or releases execution of a routine task if a signal word has been detected.

5. The food processor according to one of the preceding claims, **characterized in that** a heating of the mixing bowl and/or a running of the mixer (5) can be carried out only when the speed (C₁), the temperature (C₂) and the duration (C₃) are provided or are accepted in response to a corresponding suggestion from the food processor (1).

6. The food processor according to one of the preceding claims, **characterized in that** the optical system is embodied to carry out a recognition in terms of a lip-reading.

7. The food processor according to one of the preceding claims, **characterized in that**, as a result of the optical recognition, the optical recognition is embodied to be compared with the speech recognition to increase the recognition rate.

## Revendications

1. Appareil de cuisine électrique (1), comprenant un récipient de mélange (4) et un agitateur (5) dans le récipient de mélange (4), dans lequel l'appareil de cuisine (1) comprend un transducteur acoustique (19) et un logiciel de reconnaissance vocale est mémorisé et une routine de travail de l'appareil de cuisine (1) peut être exécutée en fonction d'une reconnaissance vocale (E), **caractérisé en ce qu'**est prévu un système optique sous la forme d'une caméra électronique avec électronique d'évaluation, qui permet de vérifier si une personne se trouve directement devant l'appareil de cuisine et se trouve aussi tournée vers lui.

2. Appareil de cuisine selon la revendication 1, **caractérisé en ce que** la reconnaissance vocale (E) est activée avec la mise sous tension de l'appareil de cuisine (1).

3. Appareil de cuisine selon l'une des revendications précédentes, **caractérisé en ce que** la reconnaissance vocale (E) ne peut être désactivée qu'en éteignant l'appareil de cuisine (1).

4. Appareil de cuisine selon l'une des revendications précédentes, **caractérisé en ce que** la reconnaissance vocale (E) ne prend en charge ou n'autorise l'exécution d'une routine de travail que si un mot signal est détecté.

5. Appareil de cuisine selon l'une des revendications précédentes, **caractérisée en ce que** le chauffage du récipient de l'agitateur et/ou le fonctionnement de l'agitateur (5) ne peuvent être mis en oeuvre que si la vitesse de rotation (C₁), la température (C₂) et la durée (C₃) sont prédéterminées ou sont acceptées sur proposition de l'appareil de cuisine (1) dans ce but.

6. Appareil de cuisine selon l'une des revendications précédentes, **caractérisé en ce que** le système optique est conçu pour effectuer une reconnaissance au sens d'une lecture labiale.

7. Appareil de cuisine selon l'une des revendications précédentes, **caractérisé en ce que** le système optique est conçu pour être ajustable avec la reconnaissance vocale à la suite de la reconnaissance optique pour augmenter le taux de reconnaissance.
